# EUROPÄISCHE PATENTSCHRIFT

(11) **EP 0 503 257 B1**
(45) Veröffentlichungstag und Bekanntmachung des Hinweises auf die Patenterteilung: **09.04.1997**
(21) Anmeldenummer: 92101420.5
(22) Anmeldetag: 29.01.1992
(51) Int. Cl.: H04M 1/00, H04M 1/274, H04M 3/42

(54) **Vorrichtung zur Bedienung eines Geräts, beispielweise eines Fernsprechapparats**
Control device of an apparatus, for example a telephone
Dispositif de commande d'un appareil, par exemple d'un poste téléphonique

(30) Priorität: 11.03.1991 DE 4107745
(43) Veröffentlichungstag der Anmeldung: 16.09.1992
(73) Patentinhaber: ROBERT BOSCH GMBH, 70442 Stuttgart (DE)
(72) Erfinder: Steuer, Manfred, Dipl.-Ing, W-6238 Hofheim (DE); Freese, Jens, W-6000 Frankfurt/M. 70 (DE)

(56) Entgegenhaltungen:
- EP-A- 0 279 233
- EP-A- 0 517 942
- DE-A- 3 112 475
- DE-A- 3 329 768
- DE-A- 3 506 910

## Beschreibung

Die Erfindung betrifft eine Vorrichtung zur Bedienung eines Geräts, beispielsweise eines Fernsprechapparates, mit einer Steuereinrichtung, einer Anzeigevorrichtung und Eingabetasten, wobei durch Betätigung der Eingabetasten Steuerfunktionen innerhalb des Gerätes auslösbar sind und unterschiedliche Funktionen den Eingabetasten zuweisbar sind, welche auf der Anzeigevorrichtung dargestellt sind.

Ein derartiges Gerät ist bereits bekannt. So wird in der DE-OS 31 12 475 ein Fernsprechapparat beschrieben, welcher Tasten mit nach verschiedenen Richtungen weisenden Pfeilen aufweist, welche zur Auswahl eines abzuwickelnden Leistungsmerkmals bzw. zum Aufsuchen einer bestimmten Stelle innerhalb eines ausgewählten Leistungsmerkmales dienen. Ist die gewünschte Stelle erreicht, so wird das Leistungsmerkmal mit der Stern-Taste gestartet bzw. mit der Raute-Taste beendet, dabei dient die Raute-Taste übrigens auch zur Einzel- oder Gesamtlöschung einer angezeigten Anzeige. Die Stern-Taste und die Raute-Taste sind Bestandteil der Wähltastatur.

Die Ausstattung eines Fernsprechapparates mit einer immer größer werdenden Zahl von Leistungsmerkmalen benötigt nicht nur eine immer größer werdende Anzahl von entsprechenden Bedienungstasten, sondern kompliziert auch immer stärker dessen Bedienung. Zur Vereinfachung der Bedienung ist deshalb bereits vorgeschlagen worden, die Bedienungstasten auf eine geringere Anzahl zu beschränken, wobei die Tastenoberfläche mit einer Flüssigkristallanzeige versehen ist, die es ermöglicht, den Tasten nicht nur unterschiedliche Funktionen zuzuweisen, sondern beispielsweise das Symbol der augenblicklich zugewiesenen Funktion auf der betreffenden Taste auch optisch darzustellen (siehe DE-OS 38 25 895, DE-OS 38 25 898).

Aus der EP 0 279 233 A2 ist ein Bedienteil für ein Mobilfunkgerät bekannt, das neben den üblichen Wähltasten eine Gruppe von Funktionstasten enthält. Durch Bedienung von zwei Tasten wird der Benutzer in verschiedene Funktionsebenen geleitet. Durch Betätigung einer weiteren Taste sind innerhalb der jeweiligen Funktionsebene spezielle Funktionsbereiche ansteuerbar.

Die Aufgabe der Erfindung besteht nun darin, eine Vorrichtung der eingangs genannten Art dahingehend auszubilden, daß bei einer Vielzahl von Leistungsmerkmalen nur eine geringe Zahl von Tasten benötigt wird und durch eine entsprechende Bedienerführung die Bedienung erleichtert ist.

Diese Aufgabe wird dadurch gelöst, daß ein Speicher mit mehreren Speicherbereichen vorgesehen ist, daß jeder Speicherbereich eine Vielzahl von Speicherplätzen aufweist, daß zur Auswahl der Speicherbereiche ein erster Zähler und zur Auswahl der einzelnen Speicherplätze ein zweiter Zähler mit dem Speicher verbunden ist, daß durch eine erste beziehungsweise eine zweite Eingabetaste eine an den beiden Zählern angeschlossene Auswerteeinrichtung steuerbar ist, daß zunächst durch Signale der ersten Eingabetaste der erste Zähler fortgeschaltet wird und die jeweils auf dem ersten Speicherplatz eingetragene Anzeigeinformation auf der Anzeigevorrichtung angezeigt wird, daß durch ein Signal der zweiten Eingabetaste der durch die augenblickliche Stellung des ersten Zählers angesteuerte Speicherbereich gekennzeichnet wird, daß durch Signale der ersten Eingabetaste der zweite Zähler fortgeschaltet wird und die auf dem jeweiligen Speicherplatz eingetragene Anzeigeinformation auf der Anzeigevorrichtung angezeigt wird und daß durch ein Signal der zweiten Eingabetaste der auf dem durch die augenblickliche Stellung des zweiten Zählers angesteuerten Speicherplatz eingespeicherte Befehl ausgelesen und an die Steuereinrichtung übermittelt wird.

Die erfindungsgemäße Vorrichtung benötigt somit nur zwei Tasten, wobei die eine Taste sowohl zur Auswahl der einzelnen Leistungsmerkmale als auch zur Auswahl der einzelnen Funktionen eines Leistungsmerkmales dient, während durch die zweite Taste das ausgewählte Leistungsmerkmal bestimmt bzw. die ausgewählte Funktion ausgelöst wird.

Vorteilhafte Weiterbildungen der Erfindung ergeben sich aus den Unteransprüchen.

Die Erfindung wird anhand eines Ausführungsbeispiels näher erläutert, welches in der Zeichnung dargestellt ist. Es zeigt:
- Fig. 1: das Blockschaltbild der Vorrichtung
und
- Fig. 2: das Beispiel einer Anordnung der Anzeigevorrichtung und der Tasten.

Der Speicher SP weist eine Vielzahl von Speicherbereichen SP1 bis SP n auf, wobei jeder dieser Speicherbereiche in eine Vielzahl von Speicherplätzen P 1 bis P m unterteilt ist. Zur Auswahl der Speicherbereiche SP 1 bis SP n dient ein erster Zähler Z 1 und zur Auswahl der einzelnen Speicherplätze P 1 bis P m dient ein zweiter Zähler Z 2. Die Ansteuerung des Speichers SP durch die beiden Zähler Z 1 und Z 2 erfolgt dadurch, daß in demjenigen Speicherbereich SP 1 bis SP n, welcher vom Zähler Z 1 angesteuert wird, die einzelnen Speicherplätze P 1 bis P m vom Zähler Z 2 angesteuert und deren Inhalt ausgelesen wird. Ihre Fortschalteimpulse erhalten die beiden Zähler Z 1 und Z 2 von einer Auswerteeinrichtung AW, an welcher die Tasten T 1 und T 2 angeschlossen sind.

Jeder Speicherplatz P ist in mehrere Felder A, C, E, M und B aufgeteilt. Die Felder A, C und E enthalten Informationen zur Anzeige auf der Anzeigevorrichtung AZ, das Feld M enthält Informationen zur Steuerung der Auswerteeinrichtung AW und das Feld B kann einen Befehl enthalten.

Die Auswerteeinrichtung AW hat die Aufgabe, je nach Betriebszustand der Vorrichtung die Fortschalteimpulse der Taste T 1 entweder an den Zähler Z 1 oder an den Zähler Z 2 weiterzuleiten, sie kann im einfachsten Fall durch eine Kippstufe verwirklicht werden.

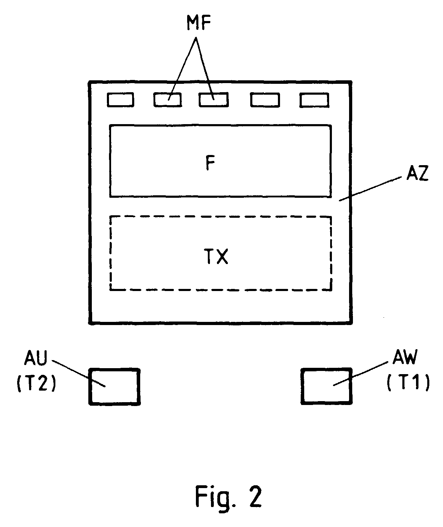

Der Ablauf der einzelnen Vorgänge innerhalb der Vorrichtung wird nun anhand des Leistungsmerkmales "Lauthören" beschrieben. Die Anzeigevorrichtung AZ (siehe Fig. 2) besteht aus den Anzeigefeldern MF, F und evtl. TX. Die Anzahl der Markierfelder MF richtet sich nach der Anzahl der bereitgestellten Leistungsmerkmale, wobei entweder die markierten Felder beispielsweise umrandet ständig sichtbar sind und das ausgewählte Feld zusätzlich ausgefüllt ist oder auch der Name des betreffenden Leistungsmerkmals angezeigt oder derselbe lediglich unterstrichen wird. Das Feld F dient zur Anzeige der ausgewählten Funktion und das Feld TX kann zur näheren Erläuterung der Funktion oder auch allgemein zur Bedienerführung herangezogen werden. Durch Betätigung der Auswahltaste AW (T1) springt die Anzeige von einem Feld MF auf das nächste Feld, während gleichzeitig im Feld F die Bezeichnung des jeweiligen Leistungsmerkmals angezeigt wird.

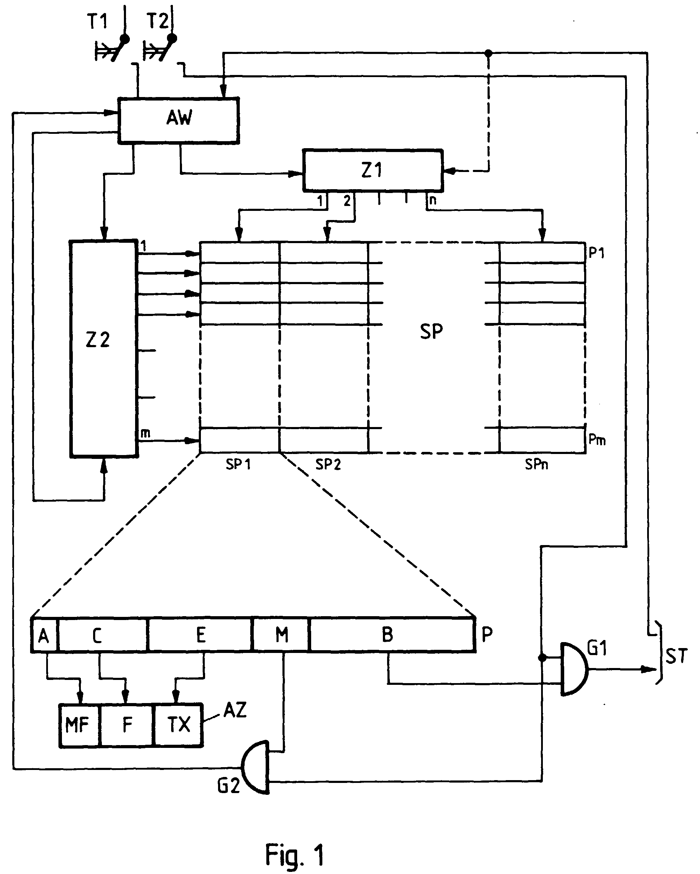

Die Signale der Taste T 1 gelangen über die Auswerteeinrichtung AW (siehe Fig. 1) zum Zähler Z 1, welcher nacheinander mit jedem Tastensignal einen anderen Speicherbereich SP ansteuert, wobei davon ausgegangen wird, daß der Zähler Z 2 sich in der Ruhelage auf dem Schritt 1 befindet. Durch das Ansteuern des betreffenden Speicherplatzes P durch die beiden Zähler Z 1 und Z 2 gelangt der Inhalt der Felder A, C und E an die Anzeigevorrichtung AZ, wo die bereits beschriebene Anzeige erfolgt, während das Feld B frei ist. Durch eine Information des Feldes M kann das Gatter G 2 vorbereitend freigegeben werden. Ist nun das gewünschte Leistungsmerkmal eingestellt, d.h. erscheint die Bezeichnung des gewünschten Leistungsmerkmals im Feld F (siehe Fig. 2) der Anzeigevorrichtung AZ, dann kann dieses durch die anschließende Betätigung der Taste T 2 (Ausführungstaste AU) markiert werden. Das Tastensignal der Taste T 2 gibt das Gatter G 2 frei, wodurch ein Umschaltsignal an die Auswerteeinrichtung AW erzeugt wird. Gleichzeitig erfolgt die Freigabe des Gatters G 1, dies ist jedoch ohne Wirkung, da das Feld B des Speicherplatzes P keinen Befehl enthält. Die Auswahleinrichtung AW ist nun umgeschaltet, so daß die weiteren Tastensignale der Taste T 1 zum Zähler Z 2 gelangen. Durch das erste Tastensignal wird der Zähler Z 2 auf den 2. Schritt und damit auf den 2. Speicherplatz P 2 weitergeschaltet. Auf dem Feld F der Anzeigevorrichtung AZ (siehe Fig.2) erscheint jetzt der Text "Lauthöreinrichtung einschalten" und evtl. auf dem Feld TX ein zusätzlicher erläuternder Text, wobei die beiden Anzeigeinformationen in den Feldern C bzw. E des Speicherplatzes P 2 enthalten sind. Das Feld M enthält wiederum eine Information, welche das Gatter G 2 vorbereitend freigibt, so daß jetzt bei Betätigung der Ausführungstaste AU (T 2) das Gatter G 1 (siehe Fig. 1) freigegeben wird und der in dem Feld B des Speicherplatzes P eingespeicherte Befehl zur Steuereinrichtung ST übermittelt wird, welche daraufhin die Einschaltung der Lauthöreinrichtung veranlaßt. Gleichzeitig erfolgt durch das Tastensignal der Taste T 2 die Freigabe des Gatters G 2, wodurch die Auswerteeinrichtung AW wieder zurückgeschaltet wird, so daß das nächste Tastensignal der Taste T 1 über die Auswerteeinrichtung AW wieder zum Zähler Z 1 gelangt, wodurch wieder die Auswahl eines anderen Leistungsmerkmals möglich wird.

Ist nun die Ausführungstaste AU (T 2) nicht betätigt worden, sondern stattdessen ein weiteres Mal die Auswahltaste AW (T 1), so wird der Zähler Z 2 auf den dritten Speicherplatz P 3 gestellt. Auf der Anzeigevorrichtung AZ, und zwar im Feld F, erscheint jetzt der Text "Lauthöreinrichtung ausschalten" und evtl. wieder ein erläuternder Text im Feld TX (siehe Fig. 2). Wird in dieser Stellung des Zählers Z 2 die Ausführungstaste AU (T 2) betätigt, so laufen die Vorgänge in der bereits beschriebenen Weise ab, wobei wiederum ein entsprechender Befehl aus dem Feld B ausgelesen und der Steuereinrichtung ST übermittelt wird, welche daraufhin die Ausschaltung der Lauthöreinrichtung veranlaßt.

Wird der Zähler Z 2 durch ein weiteres Signal der Taste T 1 auf den Speicherplatz P 4 gestellt, so kann beispielsweise auf dem Feld F der Anzeigevorrichtung AZ das Wort "Wechsel" und auf dem Feld TX ein entsprechender erläuternder Text angezeigt werden, welcher die Bedienungsperson darauf hinweist, daß durch Betätigung der Ausführungstaste AU das Verlassen des augenblicklich ausgewählten Leistungsmerkmals möglich ist. In diesem Fall erfolgt wiederum die Umschaltung der Auswahleinrichtung AW durch das Signal der Taste T 2, so daß das nächste Tastensignal der Taste T 1 wieder zur Fortschaltung des Zählers Z 1 dient. Außerdem wurde in sämtlichen Fällen durch das Signal des Gatters G 2 der Zähler Z 2 wieder auf den ersten Speicherplatz P 1 zurückgestellt. Der Bereich B des Speicherplatzes P hat in diesem Fall ("Wechsel") keinen Befehl enthalten.

Durch den erläuternden Text im Feld TX kann die Bedienungsperson darauf hingewiesen werden, daß bei erneuter Betätigung der Taste T 1 die Einstellung der Lautstärke möglich ist. So ist auf den nächsten Speicherplätzen (P 5 bis P 15) jeweils der Text, beispielsweise "Lautstärke 1", "Lautstärke 2", usw. bis "Lautstärke 10" eingespeichert, dieser Text wird im Feld F der Anzeigevorrichtung AZ angezeigt. Wird nun bei der Anzeige der gewünschten Lautstärke die Ausführungstaste AU (T 2) betätigt, so erfolgt die Freigabe des Gatters G 1, wodurch der im Feld B eingespeicherte Befehl des betreffenden Speicherplatzes P ausgelesen und der Steuereinrichtung ST übermittelt wird, die daraufhin die Einstellung der entsprechenden Lautstärke veranlaßt und über das vorbereitend freigegebene Gatter G 2 ein Signal zur Auswerteeinrichtung AW übermittelt, welches in bereits beschriebener Weise umgeschaltet wird. Nach der Anzeige der höchsten Lautstärke kann wiederum die Anzeige "Wechsel" erscheinen, so daß bei Betätigung der Ausführungstaste AU in dieser Stellung des Zählers Z 2 das Austreten aus dem bisherigen Leistungsmerkmal möglich ist. Es ist auch denkbar, in diesem Fall durch das Signal des Gatters G 2 die Auswerteeinrichtung AW zu veranlassen, den Zähler Z 2 wieder auf diejenige Zählerstellung zu stellen, in welcher der Speicherplatz P 5 angesteuert wird, welcher, wie bereits erwähnt, den Anzeigetext "Lautstärke 1" enthält, so daß eine erneute Auswahl einer beispielsweise geringeren Lautstärke möglich ist, ohne daß hierzu erneut sämtliche Einzelschritte des Leistungsmerkmals durchlaufen werden müssen.

Es ist weiterhin denkbar, das Feld B derart zu behandeln, daß dieses mit Ansteuerung des jeweiligen Speicherplatzes P in der Steuereinrichtung ST vorläufig wirksam werden, so daß die auszuwählende Lautstärke auch akustisch überprüfbar ist. Dabei erfolgt die endgültige Einstellung der ausgewählten Lautstärke wiederum durch die Betätigung der Ausführungstaste AU (T 2).

Im Feld A sämtlicher Speicherplätze P 1 bis P 15 ist die Anzeigeinformation für das Feld MF der Anzeigevorrichtung AZ enthalten, und zwar immer die Information für das Leistungsmerkmal "Lauthören". Es ist auch denkbar, das Leistungsmerkmal "Lauthören" auf zwei unterschiedliche Speicherbereiche SP aufzuteilen, und zwar zum einen das Ein- und Ausschalten der Lauthöreinrichtung und zum anderen die Auswahl der Lautstärke.

Es können auch Fälle eintreten, in welchen ein Eingriff in die Auswerteeinrichtung AW von seiten der Steuereinrichtung ST notwendig ist, und zwar in Abhängigkeit von bestimmten Betriebszuständen des Fernsprechapparates, so daß ohne Betätigung der Taste AU (T 2) der Rücksprung in die Steuerung des Zählers Z 1 durch Signale der Taste T 1 möglich ist oder bestimmte Speicher-Plätze P übersprungen werden, ohne daß hierzu Tastensignale der Taste T 1 notwendig sind.

Es folgen einige Beispiele für die Durchführung bestimmter Funktionen innerhalb ausgewählter Leistungsmerkmale, wobei die jeweiligen Texte in dem Feld F der Anzeigevorrichtung AZ angezeigt werden können.
**1. Wahl mit aufliegendem Handapparate (WAH)**
   WAH ein
   WAH aus
   Wechsel
**2. Anrufbeantworter**
   Ein
   Aus
   Abhören ein
   Abhören aus
   Wechsel
**3. Zielwahl**
   Erste Rufnummer (bzw. Name)
   Zweite Rufnummer (bzw. Name)
   Dritte Rufnummer (bzw. Name)
   .
   .
   .
   Zehnte Rufnummer (bzw.Name)
   Wechsel
**4. Rufumleitung**
   Rufumleitung ein
   Rufumleitung aus
   Wechsel
**5. Ruhe vor dem Telefon**
   Ruhe ein
   Ruhe aus
   Wechsel
**6. Weckerton**
   Tonfolge 1
   Tonfolge 2
   Tonfolge 3
   .
   .
   .
   Tonfolge 10
   Wechsel
**7. Weckerlautstärke**
   Wecker ein
   Wecker aus
   Wechsel
   Lautstärke 1
   Lautstärke 2
   Lautstärke 3
   .
   .
   .
   Lautstärke 10.
   Wechsel.

Neben Signalen für die optische Anzeigevorrichtung AZ kann der Speicherplatz P auch Signale für eine nicht gezeigte akustische Anzeigevorrichtung enthalten, welche die Bedienungsperson zusätzlich auf bestimmte Vorgänge aufmerksam macht.

Es ist auch möglich, die Bedienung durch die erfindungsgemäße Vorrichtung mit nur einer Taste durchzuführen, wobei die Funktion Auswahltaste (AW) und Ausführungstaste (AU) durch eine gemeinsame Taste, und zwar durch einen kurzen bzw. einen langen Tastendruck erfolgt.
Bei dem Ausführungsbeispiel wurde davon ausgegangen, daß das Gerät, das heißt der Fernsprechapparat, bereits eine eigene Steuereinrichtung ST aufweist und die beschriebenen Einrichtungen (AW, Z 1, Z 2 und SP) eigenständige Einrichtungen sind. Es ist jedoch auch denkbar, die Funktionen der beschriebenen Einrichtungen (AW, Z 1, Z 2, G 1 und G 2) in eine bereits vorhandene, für den neuen Einsatzzweck entsprechend programmierte Steuereinrichtung ST zu verlagern, wobei der Speicher SP einen Teil eines vorhandenen, an der Steuereinrichtung ST angeschlossenen, nicht flüchtigen Speichers bilden kann.

Die Anwendung der erfindungsgemäßen Vorrichtung ist nicht auf Fernsprechapparate beschränkt, sondern läßt sich bei einer Vielzahl von Geräten, wie beispielsweise Video-Recorder, Video-Kameras, Haushaltsgeräte, usw. anwenden.

## Patentansprüche

1. Vorrichtung zur Bedienung eines Geräts,
beispielsweise eines Fernsprechapparates, mit einer Steuereinrichtung, einer Anzeigevorrichtung und Eingabetasten, wobei durch Betätigung der Eingabetasten Steuervorgänge innerhalb des Geräts auslösbar sind und unterschiedliche Funktionen den Eingabetasten zuweisbar sind, welche auf der Anzeigevorrichtung dargestellt sind,
dadurch gekennzeichnet,
daß ein Speicher (SP) mit mehreren Speicherbereichen (SP 1 bis SP n) vorgesehen ist,
daß jeder Speicherbereich eine Vielzahl von Speicherplätzen (P 1 bis P m) aufweist,
daß zur Auswahl der Speicherbereiche (SP 1 bis SP n) ein erster Zähler (Z 1) und zur Auswahl der einzelnen Speicherplätze (P 1 bis P m) ein zweiter Zähler ( Z 2) mit dem Speicher (SP) verbunden ist,
daß durch eine erste (T 1) bzw. eine zweite Eingabe-Taste (T 2) eine an den beiden Zählern (Z 1, Z 2) angeschlossene Auswerteeinrichtung (AW) steuerbar ist,
daß zunächst durch Signale der ersten Eingabe-Taste (T 1) der erste Zähler (Z 1) fortgeschaltet wird und die jeweils auf dem ersten Speicherplatz (P 1) eingetragene Anzeigeinformation auf der Anzeigevorrichtung (AZ) angezeigt wird,
daß durch ein Signal der zweiten Eingabe-Taste (T 2) der durch die augenblickliche Stellung des ersten Zählers (Z 1) angesteuerte Speicherbereich gekennzeichnet wird,
daß durch Signale der ersten Eingabe-Taste (T 1) der zweite Zähler (Z 2) fortgeschaltet wird und die auf dem jeweiligen Speicherplatz eingetragene Anzeigeinformation auf der Anzeigevorrichtung (AZ) angezeigt wird und daß durch ein Signal der zweiten Eingabe-Taste (T 2) der auf dem durch die augenblickliche Stellung des zweiten Zählers (Z 2) angesteuerten Speicherplatz eingespeicherte Befehl ausgelesen und an die Steuereinrichtung (ST) übermittelt wird.

2. Vorrichtung nach Anspruch 1,
dadurch gekennzeichnet,
daß auf einem Speicherplatz (P) ein Steuerzeichen (M) eintragbar ist, durch welches die Auswerteeinrichtung (AW) gesteuert wird.

3. Vorrichtung nach einem der Ansprüche 1 oder 2,
dadurch gekennzeichnet,
daß die Steuereinrichtung (ST) an der Auswerteeinrichtung (AW) angeschlossen ist.

4. Vorrichtung nach einem der Ansprüche 1 bis 3,
dadurch gekennzeichnet,
daß die Auswerteeinrichtung (AW) und die Zähler (Z 1, Z 2) einen Teil der Steuereinrichtung (ST) bilden und der Speicher (SP) an der Steuereinrichtung (ST) angeschlossen ist.

5. Vorrichtung nach einem der Ansprüche 1 bis 4,
dadurch gekennzeichnet,
daß der Speicherplatz (P) einen erläuternden Text (C) enthält, welcher auf einem Feld (TX) der Anzeigevorrichtung (AZ) anzeigbar ist.

6. Vorrichtung nach einem der Ansprüche 1 bis 4,
dadurch gekennzeichnet,
daß der Speicherplatz (P) einen Text (A) enthält, welcher auf einem Feld MF der Anzeigevorrichtung (AZ) zur Anzeige des augenblicklich ausgewählten Leistungsmerkmals dient.

7. Vorrichtung nach Anspruch 1,
dadurch gekennzeichnet,
daß der im Speicherplatz (P) eingespeicherte Befehl (B) in der Steuereinrichtung (ST) vorläufig und nach einem Signal der zweiten Taste (T 2) endgültig wirksam wird.

## Claims

1. Device for controlling an apparatus, for example a telephone, having a control device, a display device and input keys, it being possible to trigger control processes within the apparatus by actuating the input keys and to assign different functions to the input keys, which functions are represented on the display device,
characterized in that a memory (SP) with a plurality of memory areas (SP 1 to SP n) is provided,
in that each memory area has a plurality of memory locations (P 1 to P m),
in that connected to the memory (SP) is a first counter (Z 1) for selecting the memory areas (SP 1 to SP n) and a second counter (Z 2) for selecting the individual memory locations (P 1 to P m),
in that an evaluation device (AW) which is connected to the two counters (Z 1, Z 2) can be controlled by means of a first input key (T 1) or a second input key (T 2),
in that the first counter (Z 1) is incremented initially by means of signals of the first input key (T 1) and the display information respectively entered at the first memory location (P 1) is indicated on the display device (AZ),
in that the memory area which is actuated by the instantaneous position of the first counter (Z 1) is characterized by a signal of the second input key (T 2),
in that the second counter (Z 2) is incremented by means of signals of the first input key (T 1) and the display information entered at the respective memory location is indicated on the display device (AZ), and in that, by means of a signal of the second input key (T 2), the instruction stored at the memory location which is driven by the instantaneous position of the second counter (Z 2) is read out and transmitted to the control device (ST).

2. Device according to Claim 1, characterized in that a control symbol (M), by means of which the evaluation device (AW) is controlled, can be entered at a memory location (P).

3. Device according to one of Claims 1 or 2, characterized in that the control device (ST) is connected to the evaluation device (AW).

4. Device according to one of Claims 1 to 3, characterized in that the evaluation device (AW) and the counters (Z 1, Z 2) form part of the control device (ST) and the memory (SP) is connected to the control device (ST).

5. Device according to one of Claims 1 to 4, characterized in that the memory location (P) contains an explanatory text (C) which can be displayed on a field (TX) of the display device (AZ).

6. Device according to one of Claims 1 to 4, characterized in that the memory location (P) contains a text (A) which is used to display the instantaneously selected performance feature on a field MF of the display device (AZ).

7. Device according to Claim 1, characterized in that the instruction (B) stored in the memory location (P) is active temporarily, and definitively after a signal of the second key (T 2), in the control device (ST).

## Revendications

1. Dispositif pour utiliser un appareil, par exemple un appareil de téléphone, avec un dispositif de commande, un dispositif d'affichage et des touches d'entrées des données, les fonctions de commande pouvant être déclenchées à l'intérieur de l'appareil en actionnant les touches d'entrée des données et des fonctions différentes pouvant être affectées aux touches d'entrée des données, fonctions qui sont représentées sur le dispositif d'affichage,
caractérisé en ce que
on prévoit une mémoire (SP) à plusieurs zones(SP 1 à SP n), chaque zone de mémoire présente une multiplicité d'emplacements de mémoire (P1 à P m), pour sélectionner les zones de mémoire (SP 1 à SP n) un premier compteur (Z 1) est relié à la mémoire et pour sélectionner les différents emplacements de mémoire (P 1 à P m)un deuxième compteur (Z 2) est relié à la mémoire (SP), on peut commander par une première (T 1) ou une deuxième touche d'entrée(T 2) de données un dispositif d'exploitation (AW) raccordé aux deux compteurs (Z 1, Z 2),
en ce qu'on fait avancer le premier compteur (Z 1) d'abord par des signaux de la première touche d'entrée de données (T 1) et on affiche les informations enregistrées sur le premier emplacement de mémoire (P 1) sur le dispositif d'affichage (AZ),
en ce que la zone de la mémoire qui est commandée par la position à un instant donné du premier compteur (Z 1) est caractérisée par un signal de la seconde touche d'entrée de données (T 2),
en ce qu'on fait avancer le second compteur par des signaux de la première touche d'entrée de données (T 1) et on affiche sur le dispositif d'affichage (AZ) l'information enregistrée sur l'emplacement correspondant de la mémoire et par un signal de la seconde touche d'entrée de données (T 2) on extrait l'ordre mis en mémoire à l'emplacement de la mémoire commandé par la position à un instant donné du second compteur (Z 2) et on le transmet au dispositif de commande (ST).

2. Dispositif selon la revendication 1,
caractérisé en ce que
on enregistre sur un emplacement de mémoire (P) un signe de commande (M), par lequel est commandé le dispositif d'exploitation (AW).

3. Dispositif selon l'une des revendications 1 ou 2,
caractérisé en ce que
le dispositif de commande (ST) est raccordé au dispositif d'exploitation (AW).

4. Dispositif selon l'une des revendications 1 à 3,
caractérisé en ce que
le dispositif d'exploitation (AW) et les compteurs (Z 1, Z 2) forment une partie du dispositif de commande (ST) et la mémoire (SP) est raccordée au dispositif de commande (ST).

5. Dispositif selon l'une des revendications 1 à 4,
caractérisé en ce que
l'emplacement de mémoire (P) contient un texte explicatif (C), qui peut être affiché sur un champ (TX) du dispositif d'affichage (AZ).

6. Dispositif selon l'une des revendications 1 à 4,
caractérisé en ce que
l'emplacement de mémoire (P) contient un texte (A), qui sur un champ MF du dispositif d'affichage (AZ) sert à afficher la caractéristique de puissance choisie à un instant donné.

7. Dispositif selon la revendication 1,
caractérisé en ce que
l'ordre (B) mis en mémoire dans l'emplacement de mémoire (P) est provisoirement opérationnel dans le dispositif de commande (ST) et après un signal de la seconde touche (T 2) le devient définitivement.
